## Europäisches Patentamt
## European Patent Office
## Office européen des brevets

(19)

(11) Publication number: **0 119 730**
**A2**

# EUROPEAN PATENT APPLICATION

(12)

(21) Application number: 84300922.6

(22) Date of filing: 14.02.84

(51) Int. Cl.³: **F 03 G 7/06,** H 05 B 3/26

(30) Priority: 15.02.83 GB 8304107
05.08.83 GB 8321132

(43) Date of publication of application: **26.09.84**
**Bulletin 84/39**

(84) Designated Contracting States: **AT BE CH DE FR IT LI**
**LU NL SE**

(71) Applicant: **OVERSEAS AUTOMATION LTD, Centre Point**
**St. Brelade, Jersey Channel Islands (GB)**
Applicant: **James, John Frederick Colston, 3 The Butts,**
**Warwick CV34 4SS (GB)**

(72) Inventor: **James, John Frederick Colston, 3 The Butts,**
**Warwick CV34 4SS (GB)**

(74) Representative: **Thompson, George Michael et al, Marks**
**& Clerk Alpha Tower Suffolk Street Queensway,**
**Birmingham B1 1TT (GB)**

(54) **Actuator systems.**

(57) An actuator system includes a fluid filled bellows 18 one end of which is fixed and the other end of which is connected to a movable member 14. A heater 22 is located within the bellows to heat the fluid therein thereby to cause expansion of the bellows and movement of the movable member 14. The heater 22 is of low thermal inertia and is a printed circuit type of heater which may be rolled to hollow cylindrical form to facilitate its location within the bellows.

This invention relates to an actuator of the kind including a bellows forming an enclosure for a fluid, the bellows being extensible and contractable in accordance with the temperature of the fluid in the enclosure within the bellows and the bellows in use being connected to a movable member.

An application of such an actuator is in a regulator for the control of gas, water or other fluid, flowing in a supply duct. The flow of the fluid through the duct is controlled by the temperature of the fluid in the bellows.

It is the object of the invention to provide an actuator of the kind referred to in which control of the temperature of the fluid within the bellows is achieved in a manner which enables quick reaction to be obtained for regulation purposes.

According to the invention there is provided a bellows type actuator comprising a bellows defining an enclosure to contain fluid and having means for connection to a movable member, the bellows being permitted to extend and collapse in accordance with the temperature of fluid contained within the bellows, and an electrically energisable heater within the bellows and in heat exchange relationship with the fluid in the bellows, said heater in use being connected to an external control circuit whereby the current flowing in the heater and its heat output can be controlled, thereby to vary the position of said movable member.

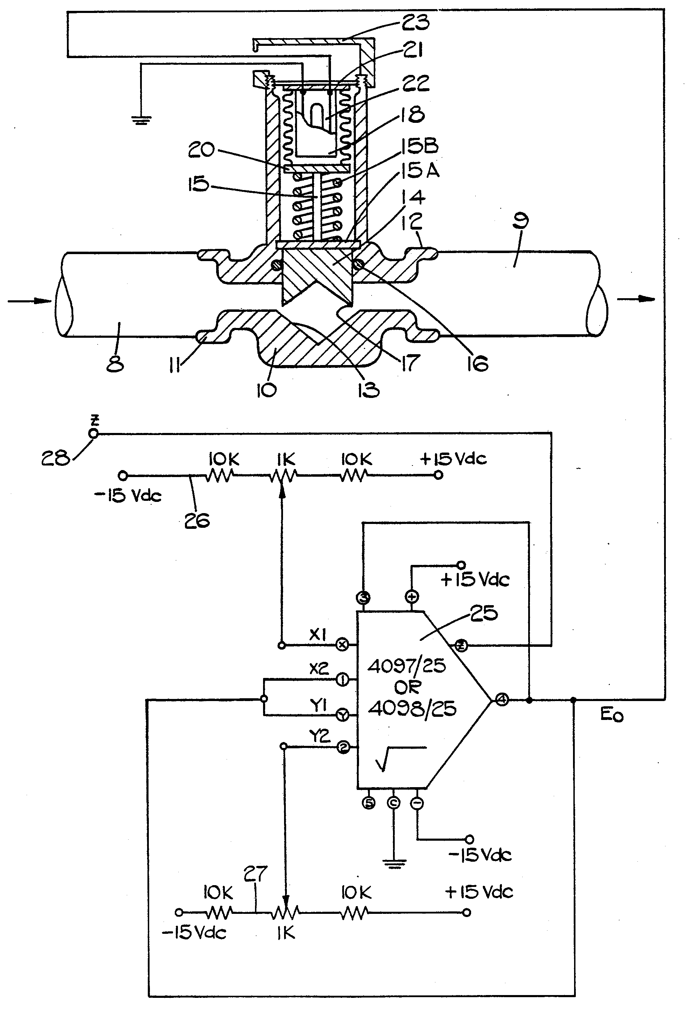

The accompanying drawing shows an example of an actuator in accordance with the invention incorporated into a regulator.

The regulator shown in the drawing is for the control of the flow of a fluid through a passage indicated as an input pipe 8 and output pipe 9. The direction of flow is indicated by the arrows. In one example the fluid may be water and the regulator is used to control the flow in a water supply system of a heating apparatus. However, it is to be understood that the regulator may be used for the control of gases or liquids for many purposes.

The regulator comprises a body 10 having an inlet 11 and an outlet 12 connected to the respective pipes 8 and 9 by means of conventional screwed compression or other joints. Between the inlet and the outlet is formed a cylindrical hole crossed by a V-shaped depression defining a seating 13 in the interior of the body.

Concentric with the cylindrical hole of the seating 13 is a cylindrical valve member 14 carried on a stem 15. This is contained within an upper cylindrical portion of the body 10. An 'O' ring seal 16 is engaged around this valve member 14 and is located in the upper cylindrical portion of the body 10.

The valve member 14 is generally cylindrical but has a V-shaped depression presented towards the seating 13 in the housing. The valve member will engage in the hole and the V-shaped depressions of the valve member and the seating co-operate to control flow from the inlet to the outlet. The drawing shows the fully open position and the greatest degree of restriction or closure is that in which the valve member is entered into the seating hole in the body. Other types of valve, such as a needle valve or other mechanism may alternatively be used.

The stem 15 of the valve member, or other equivalent part in an alternative system is connected to an actuator in particular, one closed end of a flexible metal bellows 18 which is capable of expansion and contraction in the direction of its axis which is coincident with the axes of the seating 13 and of the cylindrical member 14. This end of the bellows 18 to which the stem is fixed has a closure plate 20.

The other end of the bellows is fixed to an end plate 21 forming a closure for the outer end of the cylindrical portion of the body 10. The bellows is filled with a fluid or a mixture of fluids such for example as an ether/water mixture and possibly air, the type of fluid being chosen in accordance with the maximum ambient temperature and the type of control required. It is to be understood that the term fluid is also to include waxes.

Located between the movable end of the bellows and a plate 15A secured in the body 10 above the valve member 14, there is a coiled compression spring 15B surrounding the stem 15. Provision (not shown) is made for adjusting the distance from the bellows end to the valve member for calibrating the valve.

Extension and contraction of the bellows 18 controls the position of the valve closure member 14 relative to the seating 13 thus regulating the flow of fluid through the pipes.

The bellows 18 defines an internal sealed space within which is mounted an electrically energisable heater 22. Conveniently, this is in the form of a printed circuit board. In one example this comprises an electrically insulating substrate having an electrical resistance heater element on its surface. The printed resistor may be formed using printed circuit techniques and is covered by a layer of insulation material and this in turn is covered over with a sheet of heat conducting material such as aluminium. The layers are bonded together in any convenient way to exclude fluid from direct contact with the printed circuit portion. The thermal mass of the heater is kept as low as possible.

Alternative forms of printed circuit heaters may be provided. For example, the substrate may be a flexible electrically insulating material with the heater element printed on one surface and covered with a further layer of flexible material. The heater may be rolled to hollow cylindrical form so that it can be readily accommodated within the bellows. More than one heater element may be printed on the substrate and which may be separately energised to provide different levels of heating.

The fluid within the bellows is heated by the heater and this results in extension of the bellows 18 and therefore regulation of the flow of fluid through the regulator. Wiring connected to the heater 22 is enclosed by a top cover 23. The fluid which as mentioned, may be a mixture of fluids, is chosen with the ambient temperature in mind. In the example of an ether/water mixture the action of the water is to slow down the action to a known temperature above the ambient temperature. Above the ambient temperature the ether turns to gas and causes expansion of the bellows against the action of the spring. The spring 15B opposes movement of the valve member 14 by the bellows and as such it influences the calibration of the valve. It also assists the return of the valve member towards the fully open position when the heat produced by the heater is reduced. If there is failure of the electric supply the spring will ensure that the valve member is held in the fully open position. In the event that it is required that the valve member should move to the closed position on failure of the electric supply, and moved to the open position by heating of the fluid in the bellows, the valve member must be mounted in the opposite sense.

The actuator can be used to control the valve so that it functions as an on/off valve but as shown in the figure the heater 22 is connected through the wiring to a control circuit which forms part of a heater installation. This control circuit includes an integrated circuit 25 which has connections to circuits 26, 27 in the form of potentiometer chains to adjust voltages, and a control signal is fed in from the connection 28 to enable the current flowing in the heater 22 to be controlled.

This form of the regulator is capable of being controlled in such a manner as to give a square-root output related to the electrical input signal. Linear control may be used as required. Temperature sensors, pressure transducers or other controls may be used with the regulator and its control system to provide a feedback signal of the quantity which is being regulated.

In order to provide more sophisticated control, a feedback signal may be obtained from the stem 15 of the valve member by using a suitable position transducer. This transducer could for example be in the form of a Hall effect device with the device itself being mounted on a support located within the enclosure defined by the bellows and carried on the end plate 21 and the magnet carried by the end plate 20.    Alternatively the components of the transducer can be carried on the valve stem and a fixed part of the housing respectively.

As has been mentioned, the heater may be divided into sections to provide different levels of heating of the fluid within the bellows, to varying the operating characteristics of the regulator.  If for example the regulator is to be operated in an environment which has a wide ambient temperature range for example a desert situation one heater section can be used to maintain the fluid in the bellows at the highest ambient temperature for which temperature the fluid is chosen, with the other or another heater section providing the control function.

A further bellows containing its own heater may be operatively connected to the valve stem to operate in opposition to the existing bellows again to enable the operating characteristics of the regulator to be varied.

It will be appreciated that the termal mass of the heater should be as small as possible as also should the volume of fluid to be heated, in order to obtain as rapid a response as possible to variation in the current flow in the heater.

CLAIMS

1. A bellows type actuator comprising a bellows defining an enclosure to contain fluid and having means for connection to a movable member, the bellows being permitted to extend and collapse in accordance with the temperature of the fluid contained within the bellows, and an electrically energisable heater within the bellows and in heat exchanger relationship with the fluid in the bellows, said heater in use being connected to an external control circuit whereby the current flowing in the heater and its heat output can be controlled, thereby to vary the position of said movable member.

2. An actuator according to Claim 1 in which said heater is in the form of an electrically insulating substrate on which a resistance heater element is formed.

3. An actuator according to Claim 2 in which said heater comprises two or more resistance heater elements which can be separately supplied with electric current.

4. An actuator according to Claim 2 in which said heating element is formed on the substrate using printed circuit techniques.

5. An actuator according to Claim 4 in which said heating element is covered with a layer of insulation material which in turn is covered with a sheet of heat conducting material such as aluminium.

6.  An actuator according to Claim 4 in which said substrate is flexible whereby the heater may be rolled to hollow cylindrical form so that it can be readily accommodated within the bellows.

7.  An actuator according to Claim 1 including a spring acting to oppose movement of the movable member in one direction.

8.  An actuator according to Claim 1 including a further bellows connected to said movable member and a further heater in said further bellows to heat the fluid therein.

9.  An actuator according to any one of the preceding claims including means for providing a signal indicative of the position of said movable member.

10.  A regulator comprising an actuator as claimed in any one of the preceding claims including a valve member forming part of the regulator, and forming said movable member of the actuator.

11.  A regulator according to Claim 9 in which said valve member and said bellows are connected by a stem to an end closure plate of the bellows.

12.  A regulator according to Claim 10 in which said stem extends through a plate which is secured within the body of the regulator.

13.  An actuator substantially as hereinbefore described with reference to the accompanying drawings.